# EUROPÄISCHE PATENTSCHRIFT

(11) **EP 0 770 432 B1**
(45) Veröffentlichungstag und Bekanntmachung des Hinweises auf die Patenterteilung: **16.05.2001**
(21) Anmeldenummer: 96117143.6
(22) Anmeldetag: 25.10.1996
(51) Int. Cl.: B08B 3/02, A21B 3/16

(54) **Waschmaschine**
Washing machine
Machine à laver

(30) Priorität: 26.10.1995 DE 19539857
(43) Veröffentlichungstag der Anmeldung: 02.05.1997
(73) Patentinhaber: Pötzscher, Carola, 08223 Falkenstein/Vogtl. (DE)
(72) Erfinder: Martin, Werner, 08223 Falkenstein/Vogtl. (DE)
(74) Vertreter: Helge, Reiner, Dipl.-Ing.

(56) Entgegenhaltungen:
- EP-A- 0 569 885
- EP-A- 0 641 612
- DE-A- 1 806 107
- DE-A- 3 930 880
- DE-A- 4 208 665
- DE-C- 3 609 115
- DE-U- 9 016 780

## Beschreibung

Die Erfindung betrifft eine Waschmaschine zur Reinigung von bei der Be- und Verarbeitung verwendeten Behältern und Geräten, sowie von Stikkenwagen u.ä. in der lebensmittelverarbeitenden Industrie.

Bekannt ist aus der EP-A-569 885 eine Vorrichtung und ein Verfahren zum Reinigen von Wagen zum Transport von Speisetabletts oder dergleichen sowie ein Wagen hierfür. Die Erfindung umfaßt ein Gehäuse, welches eine verschließbare Einlaßöffnung aufweist und zum Aufnehmen des Wagens ausgebildet ist, eine Antriebseinrichtung, mittels derer der Wagen bewegbar ist, eine Reinigungseinrichtung und eine Steuereinrichtung für den Betrieb der Antriebseinrichtung und der Reinigungseinrichtung. Erfindungsgemäß ist im Gehäuse eine Dreheinrichtung für den Wagen vorgesehen, die durch die Antriebseinrichtung drehbar ist, wobei die Drehbewegung der Dreheinrichtung und der Betrieb der Reinigungseinrichtung in Abhängigkeit zueinander von der Steuereinrichtung steuerbar sind. Dadurch wird eine Reinigungsvorrichtung geschaffen, welche geringen Raumbedarf benötigt und zuverlässig mit gutem Reinigungsergebnis arbeitet. Nachteilig an dieser Lösung ist, daß die anfallende Abwärme nicht für die Erwärmung des Waschwassers ausgenutzt wird und die Trocknung nicht im sterilen Bereich durchgeführt wird.

Bekannt ist aus der DE 41 30 873 A1 ein Verfahren sowie eine Vorrichtung zum Reinigen von Stikkenwagen. Hierbei wird der Stikkenwagen gewendet, d.h. mit seiner Oberseite voraus in einen mit einer Reinigungsflüssigkeit gefüllten Behälter eingeführt, und zwar soweit, daß der Rahmen weitestgehend in der Reinigungsflüssigkeit eingetaucht ist, die drehbaren und zugleich lenkbaren Rollen und die Lagerelemente sich aber außerhalb der Reinigungsflüssigkeit befinden, durch diese Reinigungsflüssigkeit in ihrer Funktion und Lebensdauer somit nicht beeinträchtigt werden.
Der Nachteil dieser Lösung besteht darin, daß der Stikkenwagen gewendet werden, an ein Hebezeug angehängt und dann kopfüber in die Reinigungsflüssigkeit getaucht werden muß. Weiterhin muß der Stikkenwagen mit einer entsprechenden Aufnahme für das Hebezeug ausgerüstet sein. Nach dieser Prozedur ist der Stikkenwagen zwar gereinigt, aber noch mit der Reinigungsflüssigkeit, z.B. Lauge, behaftet.

Weiterhin ist aus der DE 36 09 115 C1 ein Stikkenofen bekannt der wahlweise als Backofen oder als Waschmaschine für Stikkenwagen betrieben werden kann. Der Wärmekreislauf des Stikkenofens kann zur Trocknung des Spülgutes nach dem Spülvorgang benutzt werden. Den Rauchgasen kann über einen zusätzlichen Wärmetauscher teilweise Wärmeenergie entnommen und dem Wärmekreislauf zugeführt werden.
Zwar können mit dieser Einrichtung Stikkenwagen und bei Verwendung von Drahtkörben, die in die Stikkenwagen eingehängt werden, kleinere Geräte gereinigt und getrocknet werden, größere Geräte wie z.B. Teigschüsseln/Behälter jedoch nicht.

Weiterhin sind in Großbäckereien Spülmaschinen bekannt, die in Form und Platzbedarf großvolumig ausgebildet sind. Sie sind als Durchlaufmaschinen mit Transportbändern ausgelegt.

Nachteilig ist neben dem hohen Platzbedarf auch die Beschickung und Entnahme der zu reinigenden Behälter und Geräte von Hand. Weiterhin ist die Reinigung von Stikkenwagen nicht möglich, sodaß zusätzlich noch eine Einrichtung zur Reinigung der Stikkenwagen notwendig ist.

Ein weiterer Nachteil der bekannten Einrichtung ist, daß die anfallende Wärmeenergie nur teilweise für den Reinigungsprozeß ausgenutzt wird.

Der Erfindung liegt daher die Aufgabe zugrunde, eine Waschmaschine zur Reinigung von bei der Be- und Verarbeitung verwendeten Behälter und Geräten in der lebensmittelverarbeitenden Industrie zu schaffen, insbesondere die bei der Teigbe- und -verarbeitung verwendeten zum Teil großvolumigen Behälter und Geräte sowie Stikkenwagen. Weiterhin soll die im Betrieb anfallende Wärmeenergie weitestgehend ausgenutzt und der Trocknungsprozeß im sterilen Bereich durchgeführt werden.

Erfindungsgemäß wird die Aufgabe dadurch gelöst, daß ein Drahtkorb vorgesehen ist zur Aufnahme der auf Paletten aufgeschichteten Behälter und Geräte oder Stikkenwagen und der Drahtkorb auf der Drehscheibe aufgenommen wird, wobei der sich drehende Drahtkorb ebenerdig befahrbar ist und beim Öffnen und Schließen der Kammer über ein Hebelsystem absenkbar bzw. hebbar ist. Der Antrieb für den Drahtkorb vorzugsweise oberhalb der Kammer angeordnet ist.

In den seitlichen Umfassungsflächen der Kammer sind eine Vielzahl von Düsen zur Zufuhr der erhitzten Trocknungsluft angeordnet. Die Waschmaschine kann mit einer mit Oel oder Gas betriebenen Heizeinrichtung ausgebildet sein.
Der Rauchgasabzug der Heizeinrichtung ist mit einem Rauchgasreiniger verbunden, wobei das Rauchgas zur Reinigung und Abkühlung im Gegenstrom mit Wasser beaufschlagbar ist und dieses nach dessen Neutralisation dem Vorwaschprozeß zugeführt wird.
Im Abluftkanal für die Trockenluft ist ein Wärmetauscher angeordnet. Der Wärmeüberschuß wird zur Erwärmung bzw. Vorwärmung des Waschwassers genutzt.

Die Erfindung soll anhand eines Ausführungsbeispieles näher erläutert werden.

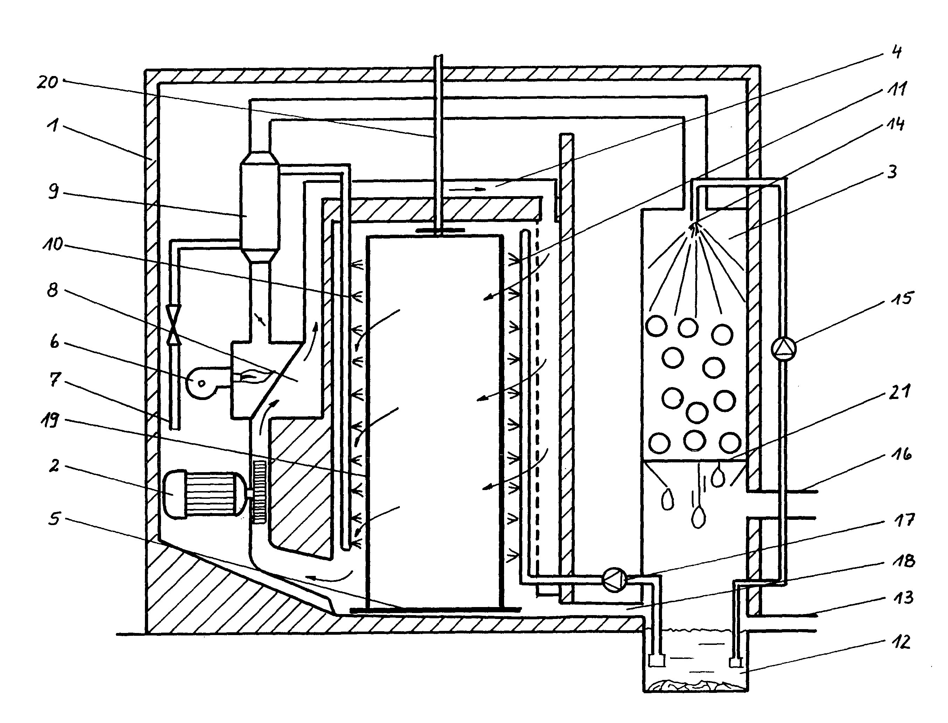

Die Figur 1 zeigt einen Schnitt durch die erfindungsgemäße Einrichtung zum Reinigen von Geräten und Behältern. Im Gehäuse 1 sind die Heizeinrichtung 6, der Drahtkorb 19 auf der Drehscheibe 5 und der Rauchgaswäscher 3 angeordnet.

Die zu reinigenden Geräte und Behälter werden auf Paletten in den Drahtkorb 19 eingefahren. Im Waschprozeß wird das bei der Rauchgaswäsche anfallende und neutralisierte Kondensat aus dem Kondensatbehälter 12 über die Leitung mit der Pumpe 17 zu den Austrittsdüsen 11 gefördert. Dieses tritt unter Druck aus den Düsen 11 aus. Der Strahl der Düsen 11 ist in Richtung des im Drahtkorb 19 befindlichen Reinigungsgutes gerichtet.

Über den Drehantrieb 20 wird der Drahtkorb 19 in Drehung versetzt. Durch den Drahtkorb 19 wird das Reinigungsgut in seiner Position gehalten. Das Kondensat bzw. die Waschlauge kann über den Ablauf 18 abfließen.

In dem sich daran anschließenden Spülgang wird das Spülwasser über die Leitung 7 zugeführt, in der Erwärmungseinrichtung 9 erwärmt und zu den Düsen 10 gefördert. Aus diesen tritt es dann in Richtung des sich im Drahtkorb 19 befindenden Reinigungsgutes aus.

Durch die Heizeinrichtung 6 wird die Trocknungsluft in der Kammer 8 erwärmt und über den Kanal 4 zu den in den seitlichen Umfassungsflächen angeordneten Düsen geleitet. Über diese angeordnete Austrittsöffnung wird die Trocknungsluft in Richtung des Drahtkorbes 19 geblasen. Durch den Ventilator 2 wird die Trocknungsluft umgewälzt. Durch diese Anordnung ist es möglich, den Trocknungsvorgang im sterilen Bereich bei ca. 130 °C vorzunehmen.

Das von der Heizeinrichtung 6 kommende Rauchgas wird im Rauchgaswäscher 3 gereinigt. Im oberen Bereich ist der Kondensateintritt 14, der über die Leitung mit der Pumpe 15 mit dem Kondensatauffangbehälter 12 verbunden ist. Der Kondensatauffangbehälter ist mit einem Kaltwasserzufluß und mit dem Kondensatabfluß 13 versehen.

Im Bereich unterhalb des Kondensataustritts 14 ist ein Filterbereich 21 angeordnet.

Im Abluftkanal 16 ist ein Ventilator angeordnet, der im System einen Unterdruck erzeugt.

Zum Einbringen des Reinigungsgutes kann entweder die Drehscheibe 5 oder der Drahtkorb 19 abgesenkt werden. Dies wird vorteilhaft über ein Hebelsystem, das mit der Kammertür der Waschmaschine verbunden ist, realisiert. Beim Öffnen wird die Drehscheibe 5 bzw. der Drahtkorb 19 abgesenkt und kann damit ebenerdig befahren werden. Beim Schließen wird die Drehscheibe 5 bzw. der Drahtkorb 19 angehoben und kann sich damit drehen. Das erfolgt zweckmäßigerweise durch das Einrasten in den Drehantrieb 20.

## Patentansprüche

1. Waschmaschine zur Reinigung von bei der Be- und
Verarbeitung verwendeten Behälter und Geräten in der lebensmittelverarbeitenden Industrie, mit einer befahrbaren Kammer (10), über die inneren Umfassungsflächen angeordneten, mit Warm- oder Kaltwasser zu versorgenden Sprühdüsen (37), einer Heizeinrichtung (40) und mit einem in der Kammer (10) angeordneten Drehscheibe (24) mit einem Antrieb, der sich außerhalb der Kammer (10) befindet,
**dadurch gekennzeichnet, daß**
ein Drahtkorb (19) vorgesehen ist zur Aufnahme der auf Paletten aufgeschichteten Behälter und Geräte oder Stikkenwagen und der Drahtkorb (19) auf der Drehscheibe (5) aufgenommen wird, wobei der sich drehende Drahtkorb (19) ebenerdig befahrbar ist und beim Öffnen und Schließen der Kammer über ein Hebelsystem absenkbar bzw. hebbar ist.

2. Waschmaschine nach Anspruch 1,
**dadurch gekennzeichnet, daß**
der Antrieb (20) für den Drahtkorb (19) vorzugsweise oberhalb der Kammer angeordnet ist.

3. Waschmaschine nach Anspruch 1 und 2,
**dadurch gekennzeichnet, daß**
in den seitlichen Umfassungsflächen der Kammer eine Vielzahl von Düsen zur Zufuhr der erhitzten Trocknungsluft angeordnet sind.

4. Waschmaschine nach Anspruch 1 bis 3,
**dadurch gekennzeichnet, daß**
der Rauchgasabzug der Heizeinrichtung (6) mit einem Rauchgasreiniger verbunden ist, wobei das Rauchgas zur Reinigung und Abkühlung im Gegenstrom mit Wasser beaufschlagbar ist und dieses nach dessen Neutralisation dem Vorwaschprozeß zugeführt wird.

## Claims

1. Cleaning machine for cleaning containers and devices used in working and processing in the foodstuff processing industry, with a chamber (10) that is accessible on wheels, spraying jets (37) that are arranged across the inner surrounding surfaces and which are to be supplied with hot or cold water, a heating device (40), and with a turning disk (24) placed in the chamber (10) with a driving mechanism which is located outside the chamber,
characterised by the following:
A wire basket (19) is designed to take in the containers and devices stacked on pallets or to take in shelf carts, and the wire basket (19) locks with the turning disk (5), while the rotating wire basket (19) can be accessed on wheels at ground level and may be lowered or lifted using a system of levers when the chamber is opened or closed.

2. Cleaning machine according to claim 1,
characterised by the following:
The driving mechanism (20) for the wire basket (19) is preferably arranged above the chamber.

3. Cleaning machine according to claim 1 and 2,
characterised by the following:
A number of jets are arranged in the surrounding side surfaces of the chamber, serving to inject heated drying air.

4. Cleaning machine according to claim 1 to 3,
characterised by the following:
The exhaust of the heating device (6) is connected with an exhaust cleaner, where water can be added to the exhaust in counterflow for cleaning and cooling, and the water is fed to the pre-washing process after its neutralisation.

## Revendications

1. Machine à laver pour le nettoyage d'appareils et de conteneurs utilisés dans la préparation et la transformation dans l'industrie alimentaire de transformation, comprenant une enceinte mobile (10), des buses d'aspersion (37) disposées sur les surfaces internes d'enceinte à alimenter en eau chaude ou eau froide, un dispositif de chauffage (40) et une plaque tournante (24) disposée dans l'enceinte (10) et munie d'un entraînement se trouvant à l'extérieur de l'enceinte (10),
caractérisée en ce qu'
il est prévu un panier métallique (19) pour recevoir des récipients et ustensiles ou chariots À étagères empilés sur palette et en ce que le panier métallique (19) est placé sur la plaque tournante (5), le panier métallique (19) en rotation pouvant être déplacé au niveau du sol et pouvant être soulevé et abaissé par un système de levage lors de l'ouverture et de la fermeture de l'enceinte.

2. Machine à laver selon la revendication 1,
caractérisée en ce que
l'entraînement (20) pour le panier métallique (19) est disposé de préférence au-dessus de l'enceinte.

3. Machine à laver selon les revendications 1 et 2,
caractérisée en ce que
dans les surfaces latérales de l'enceinte sont disposées de nombreuses buses pour l'amenée de l'air de séchage chauffé.

4. Machine à laver selon les revendications 1 à 3,
caractérisée en ce que
l'évacuation des gaz de fumée du dispositif de chauffage (6) est reliée à un purificateur de gaz de fumée, le gaz de fumée subissant l'impact de l'eau à contre-courant pour être purifié et refroidi afin d'être amené après sa neutralisation au processus de prélavage.
